# EUROPEAN PATENT SPECIFICATION

(11) **EP 1 519 858 B1**
(45) Date of publication and mention of the grant of the patent: **11.04.2007**
(21) Application number: 03764265.9
(22) Date of filing: 05.06.2003
(51) Int. Cl.: B60R 21/16

(54) **AN AIR-BAG**
AIRBAG
SAC GONFLABLE

(30) Priority: 10.07.2002 GB 0216038
(43) Date of publication of application: 06.04.2005
(73) Proprietor: AUTOLIV DEVELOPMENT AB, 447 83 Vargarda (SE)
(72) Inventor: SORIANO, Ricardo, E-46023 Valencia (ES); VALES, Manuel, E-46004 Valencia (ES); DAMM, Marcus, S-416 72 Göteborg (SE)
(74) Representative: Parry, Simon James
(86) International application number: PCT/SE2003/000931
(87) International publication number: WO 2004/007249

(56) References cited:
- EP-A1- 0 963 883
- DE-A1- 2 525 440
- DE-A1- 19 807 850

## Description

**THE PRESENT INVENTION** relates to an air-bag, and more particularly relates to an air-bag for use in a motor vehicle to provide protection for an occupant of the vehicle in the event that an accident should occur.

An airbag showing the features of the preamble of claim 1 is known from generic document DE 198 07 850 A1.

Typically, air-bags are manufactured from pieces of fabric which are cut-out from a larger piece or roll of fabric. If a generally round air-bag is to be manufactured, round pieces of fabric are cut from the larger piece or roll, and consequently there will inevitably be a lot of the original large piece or roll of fabric remaining, which will be "scrap". When manufacturing circular air-bags, such as air-bags to be mounted on the steering wheel of a motor vehicle, it is quite common for between 10-20% of the original large piece, or roll of fabric to be subsequently discarded as scrap. If the shape of the fabric pieces used to make an air-bag could be polygonal, such as square or rectangular, it would be possible to cut the polygonal-shaped pieces from a larger piece, or roll of fabric, leaving only a minimum amount of scrap. However, if two identical polygonally-shaped pieces of fabric are simply super-imposed and sewn together along their periphery, thus forming an air-bag having a front fabric layer and a rear fabric layer, a polygonal air-bag is manufactured, but, when such an air-bag is inflated, it is found to be generally "flat", and thus may be termed a two-dimensional air-bag. Ideally an air-bag should have substantial "depth", and should thus be a three-dimensional air-bag. If would be possible to add extra pieces of fabric between a front polygonal fabric layer and a rear polygonal fabric layer to provide a three-dimensional air-bag, but this may increase the scrap rate, and also increases manufacturing complexity.

The present invention seeks to provide an improved air-bag.

According to a first aspect of the present invention, there is provided an air-bag as defined in claim 1.

Preferably, each polygonal element takes the shape of a regular rectilinear polygonal.

Advantageously, each polygonal element is square in shape.

Conveniently, each polygonal element is triangular in shape.

Preferably, the warp and weft yarns of one element of fabric are angularly off-set from the warp and weft yarns of the other element of fabric.

Preferably, the angle of off-set is between 25° and 65°.

Advantageously, the angle of off-set is 60°.

Conveniently, the angle of off-set is 45 °.

In order that the invention may be more readily understood, and so that further features thereof may be appreciated, embodiments of the invention will now be described, by way of example, with reference to the accompanying drawings in which:
FIGURE 1 is a diagrammatic view of a roll of fabric, with smaller fabric elements being cut therefrom,
FIGURE 2 is a view of two super-imposed fabric elements cut from the roll of fabric illustrated in Figure 1.
FIGURE 3 is a perspective view of an air-bag in the inflated state illustrating the relative positions of parts of the two fabric elements shown in Figure 2,
FIGURE 4 is a top plan view of the air-bag of Figure 3,
FIGURE 5 is an enlarged view corresponding to part of Figure 2,
FIGURE 6 is a view corresponding to Figure 1 illustrating a roll of fabric used in an alternative embodiment of the invention,
FIGURE 7 is a view illustrating two superimposed elements of fabric taken from the roll shown in Figure 6 in the assembling of an air-bag,
FIGURE 8 is a perspective view of an air-bag made from the two elements of fabric shown in Figure 7, and
FIGURE 9 is an enlarged view of part of Figure 7.

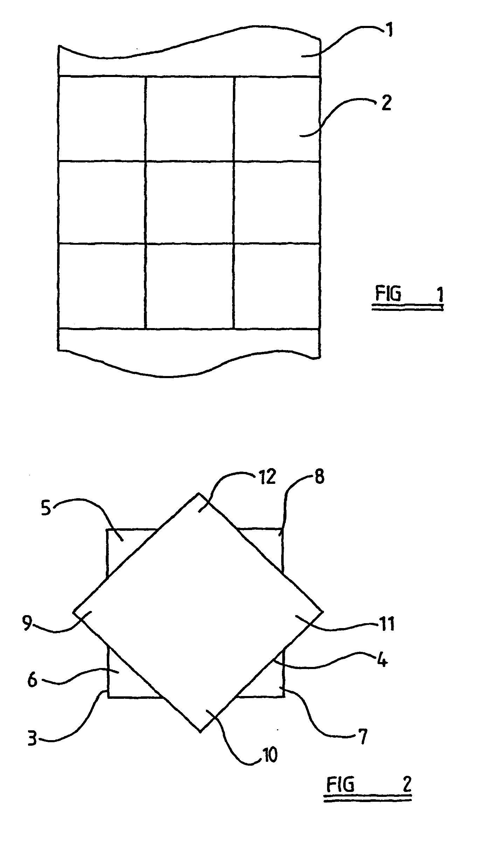

Referring initially to Figure 1 of the accompanying drawings, a large piece or roll of fabric 1 is shown. The roll or piece of fabric 1 is cut, for example using a laser cutting technique, into a plurality of separate fabric elements 2. In the illustrated embodiment the fabric elements 2 are each regular rectilinear polygons having four sides, and in the specific example shown, the polygons are squares. Thus the roll or piece of fabric 1 is to cut into a plurality of square elements 2. This can be achieved with minimum wastage or scrap.

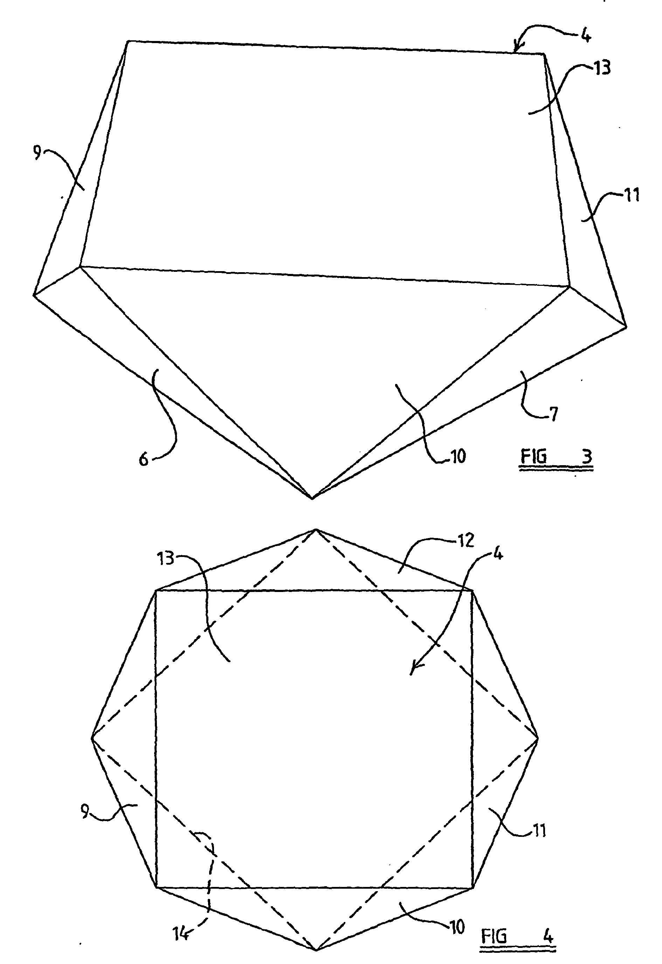

As shown in Figure 2, a first square element 3 cut from the roll or piece of fabric 1 is initially located in position, and then a second square element 4, which is of the same size and shape as the first square element 3, is located in position on top of the first square element 3. The second square element 4 is, however, not co-aligned with the first square element 3, but instead is rotated, relative to the first square element 3 by a predetermined angle which, in the described embodiment, is 45°. The lower first square element 3 thus now has four corner regions 5, 6, 7, 8 which project beyond the periphery of the upper second square element 4. Similarly the upper second square element 4 has four corner regions 9, 10, 11, 12 which extend beyond the periphery of the lower first square element 3.

The corner regions 5, 6, 7, 8 of the lower square element 3 are then effectively folded upwardly, and the corner regions 9, 10, 11, 12 of the upper square element 4 are effectively folded downwardly. Thus the four corner regions 5, 6, 7, 8 of the lower element of fabric 3 become interdigitated with the four corner regions 9, 10, 11, 12 of the upper layer of fabric 4. The corner point of each corner region 5, 6, 7, 8 of the lower element 3 touches the mid-point of a respective side edge of the upper square element 4. Similarly, the corner point of each corner region 9, 10, 11, 12 of the upper square element touches the mid-point of a respective side edge of the lower square element 3.

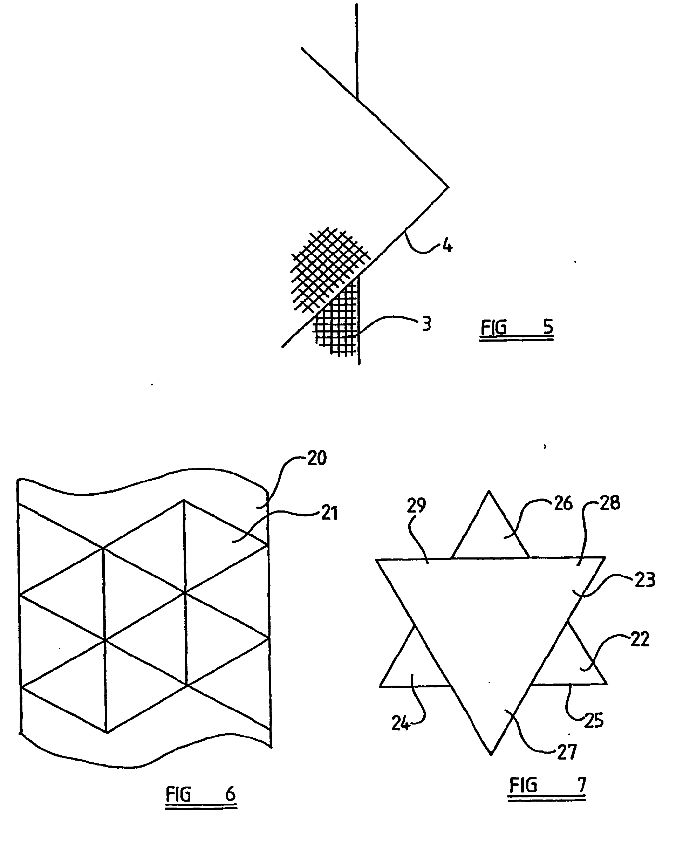

The corner regions are each of triangular form, and the corner regions of the lower square element 3, after they have been folded as explained above, leave a remaining square area 13 of fabric, having an area smaller than that of the entire lower square element, as shown clearly in Figure 4. Similarly, the corner regions of the upper square element 4 leave a remaining square area 14 of fabric. The adjacent edges of the interdigitated corner regions of the two elements of fabric 3, 4 are then sewn together to form a peripheral zig-zag seam.

The fabricated bag then has the appearance of that shown in Figure 3 where the remaining square area of the upper fabric element 4 can be seen with the corner regions 10 and 11. Received between the corner regions 10 and 11 is the corner region 7 of the lower fabric element 3, and received between the corner regions 9 and 10 of the upper element is the corner region 6 of the lower fabric element 3. Figure 4 shows the completed air-bag from above, and here it can be seen that the remaining square region of the lower sheet of fabric, indicated in phantom as region 14, is 45° off-set from the remaining square region 13 of the upper layer of fabric 4.

As can be seen from Figure 5, when the square fabric layers 3,4 are super-imposed, the warp and weft yarns (indicated schematically) of the upper layer of fabric 4 are angularly off-set from the warp and weft yarns of the lower layer of fabric 3. Thus the yarns of the two fabric elements 3, 4 are not mutually co-aligned, but instead the yarns of the upper layer of fabric 4 are inclined at a predetermined angle (in this example 45°) relative to the yarns of the lower layer 3 of fabric. It has been found that this off-set, or inclination of the warp and weft yarns provides a desirable inflation characteristic.

The seam which interconnects the interdigitated corner regions of the two elements 3, 4 of fabric has a greater length, because of its zig-zag form, than the length of the scam provided on a conventional two-dimensional air-bag of the same volume. Deployment stresses are thus distributed over a longer seam which serves to enhance the integrity of the seam.

Turning now to Figures 6 to 8, an alternative embodiment of the invention is illustrated in which triangular elements of fabric are used instead of square ones. Figure 6 illustrates the large piece or roll 20 of fabric from which a plurality of triangular fabric elements 21 are being cut, for example by means of a laser technique. The triangular fabric elements 21 are each of equilateral triangular form. Two triangular elements 22, 23 cut from the roll 20 may be super-imposed, as shown in Figure 7, so that the corner regions 24, 25, 26 of the lower triangular element 22 will project beyond the periphery of the upper triangular element 23, and similarly the corner regions 27, 28, 29 of the upper triangular element 23 will project beyond the periphery of the lower triangular element 22.

The projecting corner regions 24, 25, 26 of the lower triangular element 22 are folded upwardly, and the projecting corner regions 27, 28, 29 of the upper triangular element 23 are folded downwardly. The corner elements are effectively folded until there is a remaining triangular area on the upper triangular element 23 and a remaining triangular area on the lower triangular element 22. The corner regions are then interdigitated and interconnected by a zig-zag seam in a similar manner as described above in connection with the embodiment of Figures 1 to 5.

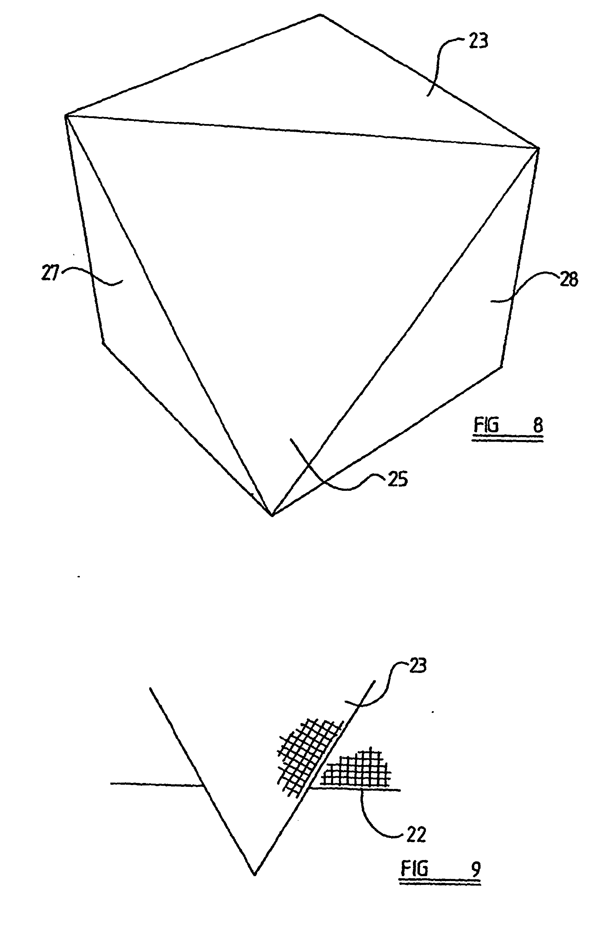

Figure 8 illustrates the completed air-bag, showing the remaining triangular part of the upper fabric layer 23 with the depending corner regions 27 and 28, which receive between them the corner region 25 of the lower element 22.

Figure 9 shows quite clearly that the warp and weft yarns of the upper layer of fabric 22 are again angularly off-set, this time by 60° relative to the warp and weft yarns of the lower layer of fabric 22. This again has been found to provide a desirable inflation characteristic.

Whilst the invention has been described with reference to square and triangular elements of fabric, other shaped elements of fabric may be used in other embodiments of the invention. It will therefore be appreciated that whilst the embodiment comprising square elements of fabric results in a yarn off-set angle of 45°, and the embodiment comprising triangular elements of fabric results in a yarn off-set angle of 60°, other shaped elements of fabric will result in other off-set angles. It has been found that a yarn off-set angle of between 25° and 65° offers desirable inflation characteristics.

In the present Specification "comprises" means "includes or consists of' and "comprising" means "including or consisting of".

## Claims

1. An air-bag formed from two separate substantially identical polygonal elements (34, 22, 23) of fabric, **characterized by** said elements not being co-aligned, the corner regions of one said element being interdigitated with the corner regions (5-12, 24-29) of the other element, the adjacent peripheral parts of the interdigitated corner regions being interconnected by means of a seam.

2. An air-bag according to Claim 1 wherein each polygonal element takes the shape of a regular rectilinear polygon.

3. An air-bag according to Claim 2 wherein each polygonal element is square in shape.

4. An air-bag according to Claim 2 wherein each polygonal element is triangular in shape.

5. An air-bag, according to any one of the preceding claims, the warp and weft yarns of one element of fabric being angularly off-set from the warp and weft yarns of the other element of fabric.

6. An air-bag according to Claim 5 wherein the angle of off-set is between 25° and 65°.

7. An air-bag according to Claim 6 wherein the angle of off-set is 60°.

8. An air-bag according to Claim 5 wherein the angle of off-set is 45°.

## Patentansprüche

1. Airbag, der aus zwei getrennten, im wesentlichen identischen polygonalen Elementen (34, 22, 23) aus Stoff gebildet ist, wobei die genannten Elemente nicht miteinander ausgerichtet sind und die Eckbereiche des einen genannten Elements mit den Eckbereichen (5-12, 24-29) des anderen Elements abwechselnd angeordnet sind, und wobei die benachbarten Umfangsbereiche der abwechselnd angeordneten Eckbereiche mittels einer Naht miteinander verbunden sind.

2. Airbag nach Anspruch 1, **dadurch gekennzeichnet, daß** jedes polygonale Element die Form eines regelmäßigen, geradlinigen Polygons annimmt.

3. Airbag nach Anspruch 2, **dadurch gekennzeichnet, daß** jedes polygonale Element eine quadratische Form aufweist.

4. Airbag nach Anspruch 2, **dadurch gekennzeichnet, daß** jedes polygonale Element eine dreieckige Form aufweist.

5. Airbag nach einem der vorangehenden Ansprüche, **dadurch gekennzeichnet, daß** die Schuß- und Kettfäden von einem Stoffelement winkelmäßig in bezug auf die Schuß- und Kettfäden des anderen Stoffelements versetzt sind.

6. Airbag nach Anspruch 5, **dadurch gekennzeichnet, daß** der Winkel des Versatzes zwischen 25° und 65° beträgt.

7. Airbag nach Anspruch 6, **dadurch gekennzeichnet, daß** der Winkel des Versatzes 60° beträgt.

8. Airbag nach Anspruch 5, **dadurch gekennzeichnet, daß** der Winkel des Versatzes 45° beträgt.

## Revendications

1. Un sac gonflable de sécurité formé à partir de deux éléments (3, 4, 22, 23) polygonaux, sensiblement identiques, séparés, en tissu, **caractérisé par le fait que** lesdits éléments ne sont pas co-alignés, les régions d'angle d'un dit élément étant disposées en alternance avec les régions d'angle (5 à 12, 24 à 29) de l'autre élément, les parties périphériques adjacentes des régions d'angle disposées en alternance étant interconnectées par une couture.

2. Sac gonflable de sécurité selon la revendication 1, dans lequel chaque élément polygonal prend la forme d'un polygone rectiligne régulier.

3. Sac gonflable de sécurité selon la revendication 2, dans lequel chaque élément polygonal est de forme carrée.

4. Sac gonflable dé sécurité selon la revendication 2, dans lequel chaque élément polygonal est de forme triangulaire.

5. Sac gonflable de sécurité selon l'une quelconque des revendications précédentes, les fils de chaîne et de trame d'un élément de tissu étant décalés angulairement des fils de chaîne et de trame de l'autre élément de tissu.

6. Sac gonflable de sécurité selon la revendication 5, dans lequel l'angle de décalage est compris dans la fourchette entre 25° et 65°.

7. Sac gonflable de sécurité selon la revendication 6, dans lequel l'angle du décalage est de 60°.

8. Sac gonflable de sécurité selon la revendication 5, dans lequel l'angle de décalage est de 45°.
